# EUROPEAN PATENT APPLICATION

(11) **EP 3 147 819 A1**
(43) Date of publication of application: **29.03.2017**
(21) Application number: 16166428.9
(22) Date of filing: 21.04.2016
(51) Int. Cl.: G06K 9/00

(54) **METHOD AND DEVICE FOR FINGERPRINT IMAGE ALIGNMENT**

(30) Priority: 22.09.2015 CN 201510609574
(71) Applicant: Xiaomi Inc., Beijing 100085 (CN)
(72) Inventor: GAO, Yuan, 100085 Beijing (CN); HAN, Gaocai, 100085 Beijing (CN); JIN, Hongzhi, 100085 Beijing (CN)
(74) Representative: Sackin, Robert

(57) **Abstract**

The present disclosure discloses a method and a device for generating an instruction, and belongs to the field of mobile terminals. The instruction generation method includes: acquiring at least two frames of fingerprint images of the same fingerprint (202); calculating position change information of the fingerprint according to the at least two frames of fingerprint images (204); and generating an operating instruction according to the position change information, wherein the operating instruction comprises a translation instruction and/or a rotation instruction (206).

## Description

### TECHNICAL FIELD

The present disclosure generally relates to the field of mobile terminals, and more particularly, to a method and a device for generating an instruction.

### BACKGROUND

A fingerprint identification module is a sensor component for identifying whether a fingerprint to be detected is a target fingerprint. Fingerprint identification modules have been widely deployed in mobile terminals such as smart phones and tablet computers.

A fingerprint identification module is configured to pre-store a fingerprint characteristic of a target fingerprint, detecting whether a fingerprint characteristic of a fingerprint to be detected is consistent with the fingerprint characteristic of the target fingerprint. If yes, it is determined that the fingerprint to be detected is the target fingerprint. However, a fingerprint identification module is only configured for fingerprint identification purpose.

### SUMMARY

Accordingly, the present invention provides a method, apparatus and device for generating instructions in accordance with claims which follow.

According to a first aspect of the present disclosure, an instruction generation method is provided, which may include: acquiring at least two frames of fingerprint images of the same fingerprint; calculating position change information of the fingerprint according to the at least two frames of fingerprint images; and generating an operating instruction according to the position change information, wherein the operating instruction comprises a translation instruction and/or a rotation instruction.

According to an exemplary embodiment, the step of calculating position change information of the fingerprint according to the at least two frames of fingerprint images may include: acquiring n characteristic areas in the ith frame of fingerprint image, i being an integer and n being a positive integer; searching, in the (i+1)th frame of fingerprint image, for matched areas matched with the n characteristic areas, respectively; for each characteristic area, calculating a motion vector of the characteristic area according to the characteristic area and the corresponding matched area; and determining the motion vectors of the n characteristic areas as the position change information of the fingerprint.

According to an exemplary embodiment, the step of acquiring n characteristic areas in the ith frame of fingerprint image may include: acquiring the n characteristic areas in the ith frame of fingerprint image according to n preset area positions, or acquiring the n characteristic areas from the ith frame of fingerprint image according to a preset condition, wherein the preset condition comprises at least one of the following: a definition is higher than a first threshold value, a contrast is higher than a second threshold value, a local characteristic is consistent with a preset characteristic and the current area is a matched area relative to a reference area in the previous frame of fingerprint image.

According to an exemplary embodiment, the step of generating an operating instruction according to the position change information may include: generating the translation instruction according to the n motion vectors when motion directions of the n motion vectors are the same.

According to an exemplary embodiment, the step of generating an operating instruction according to the position change information may include: when n is more than or equal to 2 and the motion directions of the n motion vectors are different, determining a rotation direction and a rotation angle according to the n motion vectors; and generating the rotation instruction according to the rotation direction and the rotation angle.

According to an exemplary embodiment, the step of determining a rotation direction and a rotation angle according to the n motion vectors may include: determining a rotating center point according to a perpendicular bisector corresponding to each of the n motion vectors; and determining the rotation direction and the rotation angle according to the directions of the n motion vectors and the rotating center point.

According to a second aspect of the present disclosure, a fingerprint generation device is provided, which may include: an acquisition module configured to acquire at least two frames of fingerprint images of the same fingerprint; a calculation module configured to calculate position change information of the fingerprint according to the at least two frames of fingerprint images; and an instruction generation module configured to generate an operating instruction according to the position change information, wherein the operating instruction comprises a translation instruction and/or a rotation instruction.

According to an exemplary embodiment, the calculation module may include: a characteristic acquisition sub-module configured to acquire n characteristic areas in the ith frame of fingerprint image, i being an integer and n being a positive integer; a searching sub-module configured to search, in the (i+1)th frame of fingerprint image, for matched areas matched with the n characteristic areas, respectively; a vector calculation sub-module configured to, for each characteristic area, calculate a motion vector of the characteristic area according to the characteristic area and the corresponding matched area; and a position change sub-module configured to determine the motion vectors of the n characteristic areas as the position change information of the fingerprint.

According to an exemplary embodiment, the characteristic acquisition sub-module is configured to acquire the n characteristic areas in the ith frame of fingerprint image according to n preset area positions, or the characteristic acquisition sub-module is configured to acquire the n characteristic areas from the ith frame of fingerprint image according to a preset condition, wherein the preset condition comprises at least one of the following: a definition is higher than a first threshold value, a contrast is higher than a second threshold value, a local characteristic is consistent with a preset characteristic and the current area is a matched area relative to a reference area in the previous frame of fingerprint image.

According to an exemplary embodiment, the instruction generation module may include: a first instruction sub-module configured to generate the translation instruction according to the n motion vectors when motion directions of the n motion vectors are the same.

According to an exemplary embodiment, the instruction generation module may include: a second instruction sub-module configured to, when n is more than or equal to 2 and the motion directions of the n motion vectors are different, determine a rotation direction and a rotation angle according to the n motion vectors; and a third instruction sub-module configured to generate the rotation instruction according to the rotation direction and the rotation angle.

According to an exemplary embodiment, the second instruction sub-module may further include: a center determination sub-module configured to determine a rotating center point according to a perpendicular bisector corresponding to each of the n motion vectors; and a rotation determination sub-module configured to determine the rotation direction and the rotation angle according to the directions of the n motion vectors and the rotating center point.According to a third aspect of the present disclosure, an instruction generation device is provided, which may include: a processor; and a memory configured to store executable instructions of the processor, wherein the processor may be configured to: acquire at least two frames of fingerprint images of the same fingerprint; calculate position change information of the fingerprint according to the at least two frames of fingerprint images; and generate an operating instruction according to the position change information, wherein the operating instruction comprises a translation instruction and/or a rotation instruction.

In one particular embodiment, the steps of the instruction generation method are determined by computer program instructions.

Consequently, according to a fourth aspect, the invention is also directed to a computer program for executing the steps of a method for generating instructions as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example, a CD ROM or a microelectronic circuit ROM, or magnetic storage means, for example a diskette (floppy disk) or a hard disk.

According to an exemplary embodiment, the information medium can be an integrated circuit in which the program is incorporated, the circuit being adapted to execute the method in question or to be used in its execution.

The following beneficial effects may be achieved by the technical solutions of the present disclosure: different position information of the same fingerprint in the fingerprint images is analyzed to obtain the corresponding position change information to form the corresponding operating instruction, and the operating instruction may be configured to implement a translation control or a rotation control over an operation object, so that the problem that a fingerprint identification module is only applicable to a fingerprint identification scenario is solved, and the effect of identifying a translation operation or a rotation operation of a user to further control the operation object in electronic equipment by utilizing the fingerprint identification module as a human-computer interaction component is achieved.

It should be understood that the above general description and detailed description below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a hardware structure diagram of electronic equipment, according to an exemplary embodiment of the present disclosure.
Fig. 2 is a flow chart of an instruction generation method, according to an exemplary embodiment of the present disclosure.
Fig. 3A is a flow chart of an instruction generation method, according to another exemplary embodiment.
Fig. 3B is a schematic diagram of n preset characteristic areas, according to an embodiment shown in Fig. 3A.
Fig. 3C is a schematic diagram of implementing an instruction generation method, according to an embodiment shown in Fig. 3A.
Fig. 3D is a schematic diagram of implementing an instruction generation method, according to an embodiment shown in Fig. 3A.
Fig. 3E is a schematic diagram of implementing an instruction generation method, according to an embodiment shown in Fig. 3A.
Fig. 3F is a schematic diagram of implementing an instruction generation method, according to an embodiment shown in Fig. 3A.
Fig. 3G is a schematic diagram of implementing an instruction generation method, according to an embodiment shown in Fig. 3A.
Fig. 3H is a flow chart of an instruction generation method, according to an embodiment shown in Fig. 3A.
Fig. 3I is a schematic diagram of implementing an instruction generation method, according to an embodiment shown in Fig. 3A.
Fig. 3J is a schematic diagram of implementing an instruction generation method, according to an embodiment shown in Fig. 3A.
Fig. 4 is a block diagram of an instruction generation device, according to an exemplary embodiment.
Fig. 5 is a block diagram of an instruction generation device, according to another exemplary embodiment.
Fig. 6 is a block diagram of a device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

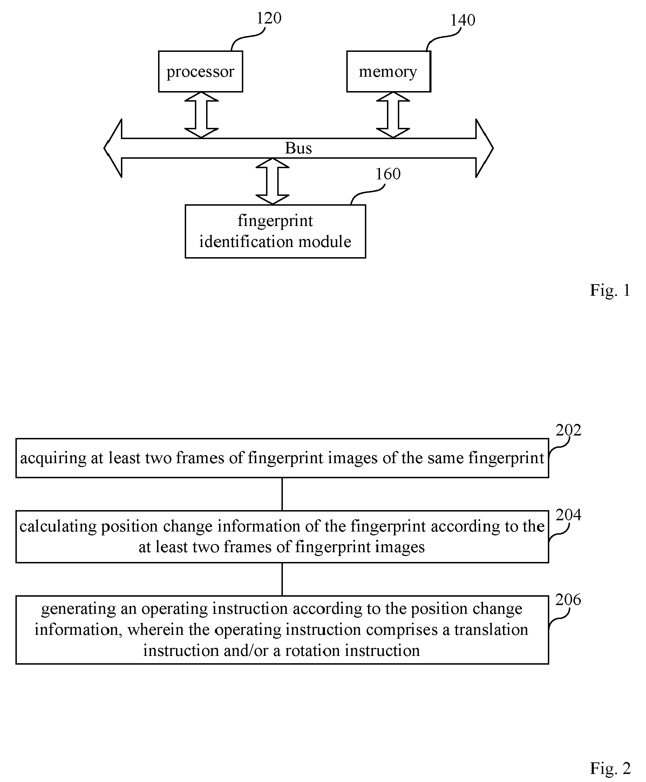

Fig. 1 is a hardware structure diagram of electronic equipment, according to an exemplary embodiment of the present disclosure. The electronic equipment may be a mobile terminal such as a smart phone, a tablet computer and an E-book reader. The mobile terminal includes a processor 120, as well as a memory 140 and fingerprint identification module 160, which are connected with the processor 120 respectively.

Executable instructions of the processor 120 are stored in the memory 140.

The fingerprint identification module 160 is also called a fingerprint identification sensor, and the fingerprint identification module 160 has fingerprint acquisition and fingerprint identification capabilities.

Fig. 2 is a flow chart of an instruction generation method, according to an exemplary embodiment of the present disclosure. The instruction generation method may be executed by the fingerprint identification module or processor shown in Fig. 1. As shown in Fig. 2, the instruction generation method may include the following steps.

Step 202: acquiring at least two frames of fingerprint images of the same fingerprint.

The fingerprint identification module has a capability of acquiring a fingerprint image. Optionally, when a finger is placed in an identification area of the fingerprint identification module, the fingerprint identification module may acquire the frames of fingerprint images at a preset time interval.

Step 204: calculating position change information of the fingerprint according to the at least two frames of fingerprint images.

If the finger translates or rotates in the identification area of the fingerprint identification module, the fingerprint image of the finger may also change. The position change information of the fingerprint may be calculated by virtue of the at least two frames of fingerprint images which are sequentially acquired.

Step 206: generating an operating instruction according to the position change information, wherein the operating instruction comprises a translation instruction and/or a rotation instruction.

Optionally, the operating instruction is used by the processor of the electronic equipment in controlling an operation object. The operation object is a user interface element displayed on a display screen or hardware in the electronic equipment. There are no limits made to a type of the operation object in the embodiment of the present disclosure.

In view of the above, according to the instruction generation method provided by the present disclosure, different position information of the same fingerprint in the fingerprint images is analyzed to obtain the corresponding position change information to form the corresponding operating instruction, and the operating instruction may be configured to implement a translation control or a rotation control over the operation object, so that the problem that the fingerprint identification module is only applicable to a fingerprint identification scenario is solved, and the effect of identifying a translation operation or a rotation operation of a user to further control the operation object in the electronic equipment by utilizing the fingerprint identification module as a human-computer interaction component is achieved.

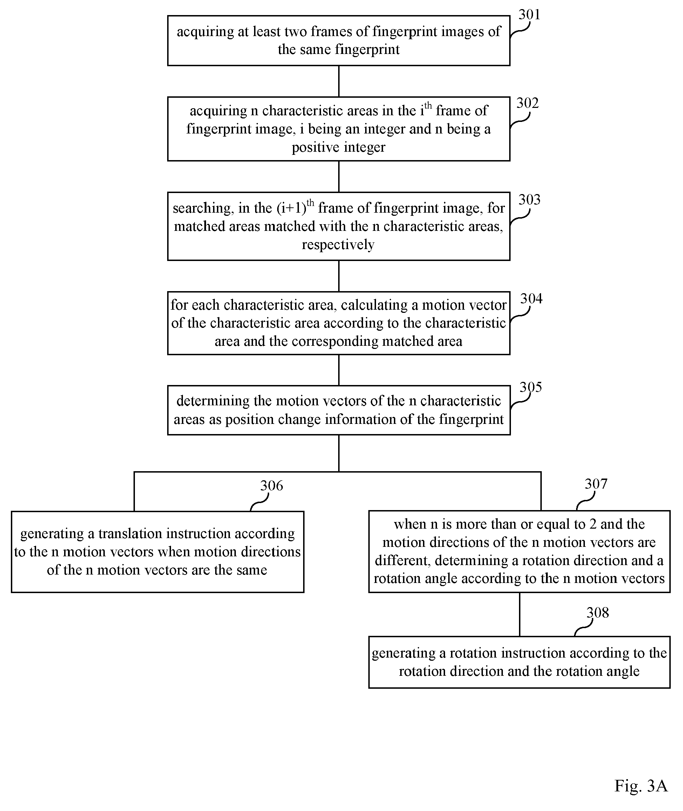

Fig. 3A is a flow chart of an instruction generation method, according to another exemplary embodiment. The instruction generation method in the embodiment may be executed by a fingerprint identification module. As shown in Fig. 3A, the instruction generation method may include the following steps:
Step 301: acquiring at least two frames of fingerprint images of the same fingerprint.

Optionally, the fingerprint identification module acquires the frames of fingerprint images at a preset time interval.

Optionally, the fingerprint identification module is further provided with a contact sensing device, and the contact sensing device may detect whether a finger of a user contacts the fingerprint identification module. When the finger of the user contacts the fingerprint identification module, the fingerprint identification module acquires the frames of fingerprint images at the preset time interval, and when the finger of the user does not contact the fingerprint identification module, the fingerprint identification module stops acquiring the fingerprint images.

For the same fingerprint, the fingerprint identification module may acquire a sequence of fingerprint images, the sequence of fingerprint images includes multiple frames of fingerprint images which are sequentially arranged. If the finger of the user translates or rotates on the fingerprint identification module, the fingerprint images in the sequence of fingerprint images may reflect such a translation process or rotating process.

Step 302: acquiring n characteristic areas in the ith frame of fingerprint image, i being an integer and n being a positive integer.

The sequence of fingerprint images includes the multiple frames of fingerprint images which are sequentially arranged. Optionally, the fingerprint identification module analyzes a position change through two adjacent frames of fingerprint images. First, the fingerprint identification module acquires the n characteristic areas in the ith frame of fingerprint image. Each characteristic area may be a block with x*y pixels, and values of x and y depend on requirements on a calculation capability and identification accuracy of the fingerprint identification module. Generally, each characteristic area may have the same size, but may also have different sizes.

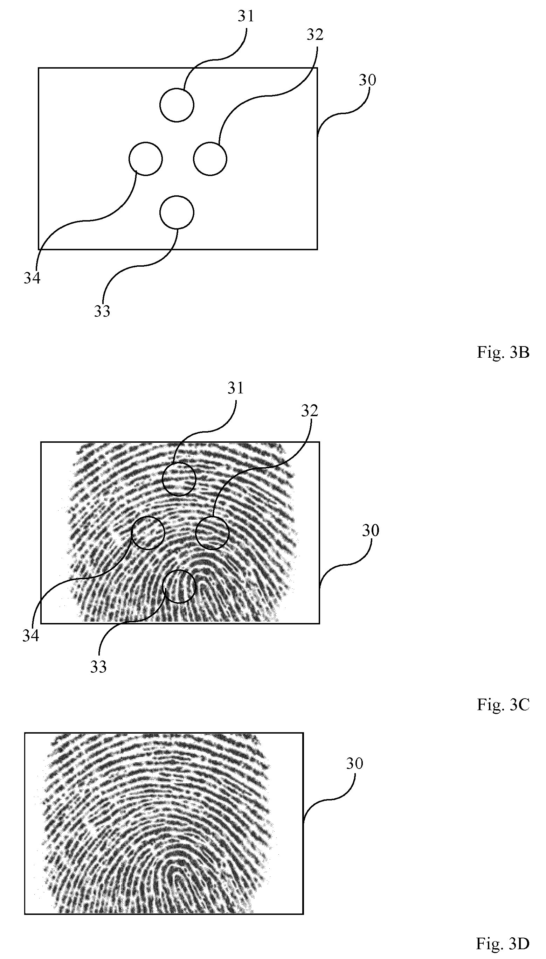

With respect to whether the characteristic areas are preset or dynamically selected, any one of the following two implementation manners may be adopted in this step.
1) The n characteristic areas in the ith frame of fingerprint image are acquired according to n preset area positions.
   In this implementation, the n area positions are preset, and when the finger of the user is placed on the fingerprint identification area, local images of the fingerprint image in n areas are acquired as the n characteristic areas.
   As shown in Fig. 3B, round areas 31-34 are 4 preset characteristic areas in the fingerprint identification area 30. As shown in Fig. 3C, when the finger of the user is placed in the fingerprint identification area, the 4 characteristic areas in the round areas 31-34 are acquired from the first frame of fingerprint image, and the fingerprint identification module stores the obtained four characteristic areas in a memory of the fingerprint identification module.
2) The n characteristic areas are acquired from the ith frame of fingerprint image according to a preset condition, wherein the preset condition comprises at least one of the following: a definition is higher than a first threshold value, a contrast is higher than a second threshold value, a local characteristic is consistent with a preset characteristic and the current area is a matched area relative to a reference area in the previous frame of fingerprint image.

In this implementation, the n area positions are not preset, and the n characteristic areas are dynamically selected according to the ith frame of fingerprint image obtained by placing the finger of the user in the fingerprint identification area.

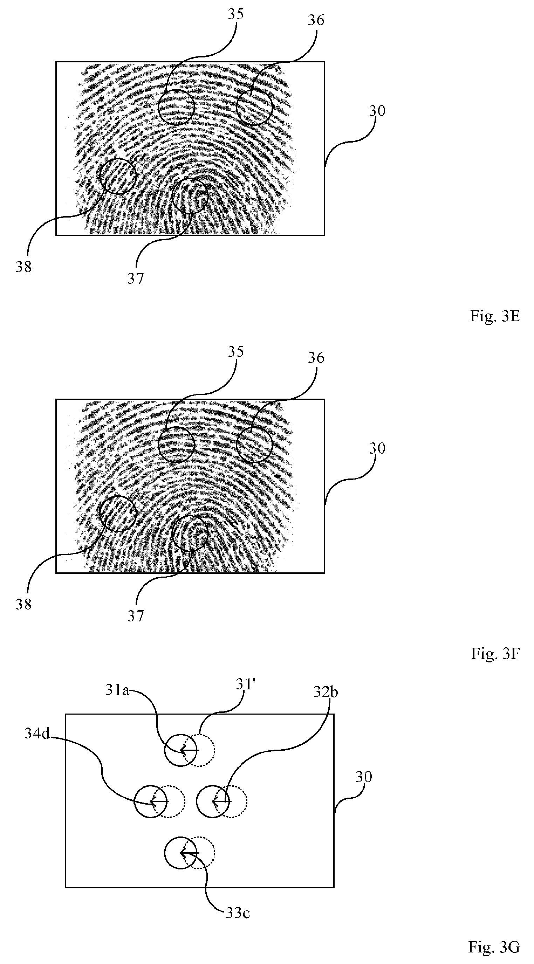

As shown in Fig. 3D, the fingerprint identification module has acquired the first fingerprint image. A definition of the first frame of fingerprint image is compared with the first threshold value, blocks with top 4 definitions higher than the first threshold value are selected to obtain the 4 characteristic areas, and the first threshold value may be set according to an identification requirement. As shown in Fig. 3E, round areas 35-38 are the 4 acquired characteristic areas, and the 4 acquired characteristic areas are stored in the fingerprint identification module.

Similarly, the fingerprint identification module may also select the characteristic areas according to at least one of following: the contrast is higher than the second threshold value, the local characteristic is consistent with the preset characteristic and the current area is the matched area relative to the reference area in the previous frame of fingerprint image.

Step 303: searching, in the (i+1)th frame of fingerprint image, for matched areas matched with the n characteristic areas, respectively.

For a characteristic area, if the characteristic area displaces or rotates in the (i+1)th frame of fingerprint image, the matched area of the characteristic area may be found in the (i+1)th frame of fingerprint image by virtue of a motion object detection technology.

A similarity between each characteristic area and the corresponding matched area may be represented by a parameter such as a Hadamard Absolute Difference (HAD), a Sum of Absolute Difference (SAD) and a Sum of Absolute Transformed Difference (SATD), and there are no limits made in the embodiment. That is, for each characteristic area, the matched area may be found in the (i+1)th frame of fingerprint image under a normal condition.

For example, as shown in Fig. 3F, when the finger of the user moves in the fingerprint identification area, the second frame of fingerprint image in Fig. 3F is recorded in the memory of the fingerprint identification module, the second frame of fingerprint image is searched for characteristic areas matched with the 4 selected characteristic areas in the first frame of fingerprint image in Fig. 3C, the 4 round areas shown in Fig. 3F being the matched areas matched with the characteristic areas in the second frame of fingerprint image, and then information of the found matched areas is stored in the memory of the fingerprint identification module.

Step 304: for each characteristic area, calculating a motion vector of the characteristic area according to the characteristic area and the corresponding matched area.

The fingerprint identification module calculates the motion vector of the characteristic area between the two frames of images according to position information of the characteristic area and the corresponding matched area, the motion vector including a motion direction and a motion distance of the characteristic area.

As shown in Fig. 3G, a dotted round area 31' represents a position of the characteristic area in the first frame of fingerprint image in Fig. 3C, a solid round area 32' represents a position of the matched area matched with the characteristic area in the second frame of fingerprint image in Fig. 3F, and the fingerprint identification module calculates the motion vector of the characteristic area 31 according to the characteristic area and the corresponding matched area. Exemplarily, circle centers of two round areas are selected as starting and ending points, the vector 31 a is the motion vector of the characteristic area 31, the vector 32b is the motion vector of the characteristic area 32, the vector 33c is the motion vector of the characteristic area 33 and the vector 34d is the motion vector of the characteristic area 34.

Step 305: determining the motion vectors of the n characteristic areas as position change information of the fingerprint.

As shown in Fig. 3G, the fingerprint identification module calculates the motion vectors of the characteristic areas 31-34 in Fig. 3C, and determines the four motion vectors as the position change information of the fingerprint.

The motion vector 31a indicates that the characteristic area 31 translates leftwards by 2 units, the motion vector 32b indicates that the characteristic area 32 translates leftwards by 2 units, the motion vector 33c indicates that the characteristic area 33 translates leftwards by 2 units and the motion vector 34d indicates that the characteristic area 34 translates leftwards by 2 units.

Step 306: generating a translation instruction according to the n motion vectors when motion directions of the n motion vectors are the same.

As shown in Fig. 3G, the directions of the 4 motion vectors are the same, and are leftward, the motion distances are all 2 units, and then the fingerprint identification module generates the translation instruction. The translation instruction contains a translation direction and a translation distance, i.e. information indicating that the motion direction is leftward and the motion distance is 2 units.

Optionally, the fingerprint identification module transmits the generated translation instruction to a Central Processing Unit (CPU), and the CPU controls the operation object to translate leftwards by 2 units according to the translation instruction.

Step 307: when n is more than or equal to 2 and the motion directions of the n motion vectors are different, determining a rotation direction and a rotation angle according to the n motion vectors.

Optionally, when the directions of the n motion vectors are inconsistent, it is necessary to determine the rotation direction and the rotation angle to generate an operating instruction according to the motion vectors.

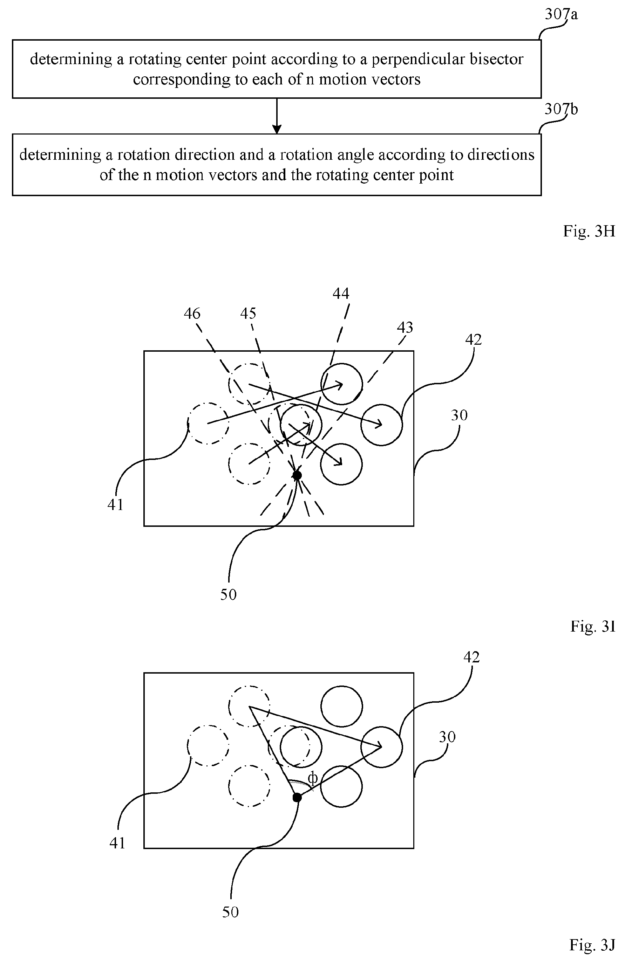

Optionally, the step may, as shown in Fig. 3H, include the following sub-steps:

Step 307a: determining a rotating center point according to a perpendicular bisector corresponding to each of the n motion vectors.

The fingerprint identification module determines the rotating center point according to the perpendicular bisector corresponding to each calculated motion vector.

For example, as shown in Fig. 3I, a dotted round area 41 represents the position of the 4 characteristic areas in the ith frame of fingerprint image, a solid round area 42 represents the position of the matched areas matched with the characteristic areas in the (i+1)th frame of fingerprint image, dotted lines 43-46 are the perpendicular bisectors of the 4 motion vectors, and a point 50 is an intersection of the perpendicular bisectors of the 4 motion vectors, i.e. the rotating center point.

Step 307b: determining the rotation direction and the rotation angle according to the directions of the n motion vectors and the rotating center point.

The fingerprint identification module determines the rotation direction according to the direction of any motion vector relative to the rotating center point 50. The fingerprint identification module determines the rotation angle according to determined included angles between connecting lines of a starting point and ending point of any motion vector with the rotating center point 50.

As shown in Fig. 3J, the fingerprint identification module determines that the rotation direction is clockwise and that the rotation angle φ is 90 degrees according to the motion vectors.

Step 308: generating a rotation instruction according to the rotation direction and the rotation angle.

The fingerprint identification module generates the rotation instruction according to the calculated rotation direction and rotation angle, the rotation instruction including the rotation direction and the rotation angle.

Optionally, the fingerprint identification module transmits the generated rotation instruction to the connected CPU, and the CPU controls the operation object to rotate clockwise by 90 degrees according to the rotation instruction.

In view of the above, according to the instruction generation method provided by the embodiment, different position information of the same fingerprint in the fingerprint images is analyzed to obtain the corresponding position change information to form the corresponding operating instruction, and the operating instruction may be configured to implement a translation control or a rotation control over the operation object, so that the problem that the fingerprint identification module is only applicable to a fingerprint identification scenario is solved, and the effect of identifying a translation operation or a rotation operation of the user to further control the operation object in the electronic equipment by utilizing the fingerprint identification module as a human-computer interaction component is achieved.

According to the instruction generation method provided by the embodiment, the translation operation and rotation operation of the user are further distinguished according to whether the motion directions of the multiple motion vectors are the same or different, and the translation instruction or the rotation instruction is calculated by virtue of the motion vectors formed by the n characteristic areas and the matched areas, so that the effect of identifying the type of the operation of the user and further generating the corresponding operating instruction by virtue of the fingerprint identification module is achieved.

In a schematic example, when the finger of the user moves in the identification area of the fingerprint identification module, the fingerprint identification module acquires 6 frames of fingerprint images, acquires 4 characteristic areas in the first frame of fingerprint image, searches the second frame of fingerprint image for 4 matched areas matched with the characteristic areas respectively, calculates motion vectors of the 4 characteristic areas according to the characteristic areas and the matched areas, determines the position change information of the fingerprint according to the motion vectors, and generates the corresponding operating instruction. After the instruction is generated, the fingerprint identification module stores the 4 matched areas in the second frame of fingerprint image as 4 characteristic areas, continues searching the third frame of fingerprint image for 4 matched areas, and executes Step 304 to Step 308 after the matched areas are found; and similarly, the fingerprint identification module searches the fourth, fifth and sixth frames of fingerprint images for 4 corresponding matched areas respectively, and executes Step 304 to Step 308. Different position information of the same fingerprint in the fingerprint images is analyzed to obtain the corresponding position change information to form the corresponding operating instruction, so that the effect of controlling the operation object in the electronic equipment is achieved.

In another schematic example, due to movement of the finger, the originally selected characteristic areas may move out of the identification area of the fingerprint identification module, which may cause the condition that the position change information of the fingerprint cannot be determined according to the motion vectors of the characteristic areas and improbability in generating the corresponding instruction for implementing control over the operation object. It may be set that, after the ith frame of fingerprint image is acquired, when i is an odd number, the n characteristic areas are selected for the ith frame of fingerprint image, the (i+1)th frame of fingerprint image is searched for the matched areas matched with the characteristic areas in the ith frame, the motion vectors of the characteristic areas are calculated according to the characteristic areas and the matched areas and the position change of the fingerprint is determined according to the motion vectors, thereby generating the corresponding operating instruction to implement control over the operation object.

For example, after acquiring the 6 frames of fingerprint images of the same fingerprint, selecting the 4 characteristic areas from the first frame of fingerprint image and storing the 4 characteristic areas, the fingerprint identification module searches the second frame of fingerprint image for the matched areas matched with the characteristic areas, executes Step 304 to Step 308 after the matched areas are found, reselects characteristic areas from the third frame of fingerprint image after the steps are finished, searches the fourth frame of fingerprint image for the matched areas, executes Step 303 to Step 308, and performs the same operation on the other frames until the position change information of the fingerprint is determined. The characteristic areas and the matched areas are continuously selected from the fingerprint images, so that the effect that the instruction may still be accurately generated to implement control over the operation object even when a certain fingerprint is not in the identification area is achieved.

It is important to note that the number n of the characteristic areas required by different operating instructions is different, the number n of the characteristic area required by the translation instruction is at least 1, and the number n of the characteristic areas required by the rotation instruction is at least 2.

It is important to note that, because the calculation capability of the fingerprint identification module is probably limited, the fingerprint identification module only acquires the fingerprint images and sends the fingerprint images to the CPU and then the CPU executes Step 302 to Step 308 in the optional embodiment based on the method embodiment.

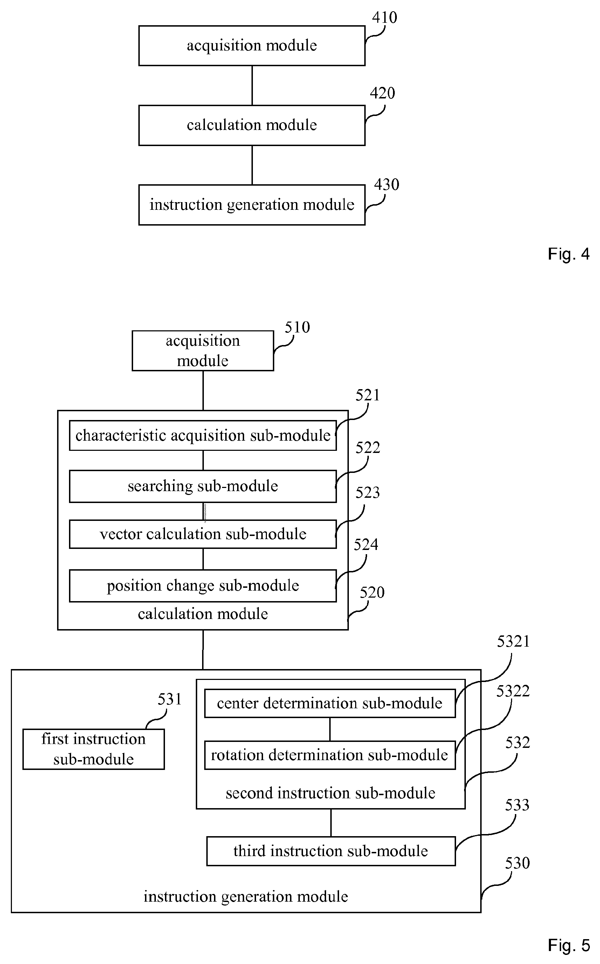

Fig. 4 is a block diagram of an instruction generation device, according to an exemplary embodiment. The instruction generation device may be implemented as all or part of the abovementioned electronic equipment capable of generating an instruction by software, hardware or a combination of the two. The device includes:
an acquisition module 410 configured to acquire at least two frames of fingerprint images of the same fingerprint;
a calculation module 420 configured to calculate position change information of the fingerprint according to the at least two frames of fingerprint images; and
an instruction generation module 430 configured to generate an operating instruction according to the position change information, wherein the operating instruction comprises a translation instruction and/or a rotation instruction.

In view of the above, according to the instruction generation device provided by the embodiment, different position information of the same fingerprint in the fingerprint images is analyzed to obtain the corresponding position change information to form the corresponding operating instruction, so that the problem that a fingerprint identification module is only applicable to a fingerprint identification scenario is solved, and the effect of identifying a translation operation or a rotation operation of a user to further control an operation object in the electronic equipment by utilizing the fingerprint identification module as a human-computer interaction component is achieved.

Fig. 5 is a block diagram of an instruction generation device, according to another exemplary embodiment. The instruction generation device may be implemented as all or part of the abovementioned electronic equipment capable of generating an instruction by software, hardware or a combination of the two. The device includes:
an acquisition module 510 configured to acquire at least two frames of fingerprint images of the same fingerprint;
a calculation module 520 configured to calculate position change information of the fingerprint according to the at least two frames of fingerprint images; and
an instruction generation module 530, configured to generate an operating instruction according to the position change information, wherein the operating instruction comprises a translation instruction and/or a rotation instruction.

The calculation module 520 includes the following sub-modules:
a characteristic acquisition sub-module 521 configured to acquire n characteristic areas in the ith frame of fingerprint image, i being an integer and n being a positive integer;
a searching sub-module 522 configured to search, in the (i+1)th frame of fingerprint image, for matched areas matched with the n characteristic areas respectively;
a vector calculation sub-module 523 configured to, for each characteristic area, calculate a motion vector of the characteristic area according to the characteristic area and the corresponding matched area; and
a position change sub-module 524 configured to determine the motion vectors of the n characteristic areas as the position change information of the fingerprint.

The characteristic acquisition sub-module 521 is configured to acquire the n characteristic areas in the ith frame of fingerprint image according to n preset area positions,
or,
the characteristic acquisition sub-module 521 is configured to acquire the n characteristic areas from the ith frame of fingerprint image according to a preset condition, the preset condition may include at least one of the following: a definition is higher than a first threshold value, a contrast is higher than a second threshold value and a local characteristic is consistent with a preset characteristic.

The instruction generation module 530 includes the following sub-modules:
a first instruction sub-module 531 configured to generate the translation instruction according to the n motion vectors when motion directions of the n motion vectors are the same;
a second instruction sub-module 532 configured to, when n is more than or equal to 2 and the motion directions of the n motion vectors are different, determine a rotation direction and a rotation angle according to the n motion vectors; and
a third instruction sub-module 533 configured to generate the rotation instruction according to the rotation direction and the rotation angle.

The second instruction sub-module 532 includes the following sub-modules:
a center determination sub-module 5321 configured to determine a rotating center point according to a perpendicular bisector corresponding to each of the n motion vectors; and
a rotation determination sub-module 5322 configured to determine the rotation direction and the rotation angle according to the directions of the n motion vectors and the rotating center point.

In view of the above, according to the instruction generation device provided by the embodiment, different position information of the same fingerprint in the fingerprint images is analyzed to obtain the corresponding position change information to form the corresponding operating instruction, and the operating instruction may be configured to implement a translation control or a rotation control over an operation object, so that the problem that a fingerprint identification module is only applicable to a fingerprint identification scenario is solved, and the effect of identifying a translation operation or a rotation operation of a user to further control the operation object in the electronic equipment by utilizing the fingerprint identification module as a human-computer interaction component is achieved.

According to the instruction generation device provided by the embodiment, the translation operation and rotation operation of the user are further distinguished according to whether the motion directions of the multiple motion vectors are the same or different, and the translation instruction or the rotation instruction is calculated by virtue of the motion vectors formed by the n characteristic areas and the matched areas, so that the effect of identifying a type of the operation of the user and further generating the corresponding operating instruction by virtue of the fingerprint identification module is achieved.

The present disclosure further provides an instruction generation device, which includes: a processor; and
a memory configured to store executable instructions of the processor,
wherein the processor may be configured to:
acquire at least two frames of fingerprint images of the same fingerprint;
calculate position change information of the fingerprint according to the at least two frames of fingerprint images; and
generate an operating instruction according to the position change information, wherein the operating instruction comprises a translation instruction and/or a rotation instruction.

Optionally, calculating position change information of the fingerprint according to the at least two frames of fingerprint images includes:
acquiring n characteristic areas in the ith frame of fingerprint image, i being an integer and n being a positive integer;
searching, in the (i+1)th frame of fingerprint image, for matched areas matched with the n characteristic areas respectively;
for each characteristic area, calculating a motion vector of the characteristic area according to the characteristic area and the corresponding matched area; and
determining the motion vectors of the n characteristic areas as the position change information of the fingerprint.

Optionally, acquiring n characteristic areas in the ith frame of fingerprint image includes:
acquiring the n characteristic areas in the ith frame of fingerprint image according to n preset area positions; or
acquiring the n characteristic areas from the ith frame of fingerprint image according to a preset condition, wherein the preset condition comprises at least one of the following: a definition is higher than a first threshold value, a contrast is higher than a second threshold value and a local characteristic is consistent with a preset characteristic.

Optionally, generating an operating instruction according to the position change information includes:
generating the translation instruction according to the n motion vectors when motion directions of the n motion vectors are the same.

Optionally, generating the operating instruction according to the position change information includes:
when n is more than or equal to 2 and the motion directions of the n motion vectors are different, determining a rotation direction and a rotation angle according to the n motion vectors; and
generating the rotation instruction according to the rotation direction and the rotation angle.

Optionally, determining a rotation direction and a rotation angle according to the n motion vectors includes:
determining a rotating center point according to a perpendicular bisector corresponding to each of the n motion vectors; and
determining the rotation direction and the rotation angle according to the directions of the n motion vectors and the rotating center point.

In view of the above, according to the instruction generation device provided by the embodiment, different position information of the same fingerprint in the fingerprint images is analyzed to obtain the corresponding position change information to form the corresponding operating instruction, and the operating instruction may be configured to implement a translation control or a rotation control over an operation object, so that the problem that a fingerprint identification module is only applicable to a fingerprint identification scenario is solved, and the effect of identifying a translation operation or a rotation operation of a user to further control the operation object in electronic equipment by utilizing the fingerprint identification module as a human-computer interaction component is achieved.

According to the instruction generation device provided by the embodiment, the translation operation and rotation operation of the user are further distinguished according to whether the motion directions of the multiple motion vectors are the same or different, and the translation instruction or the rotation instruction is calculated by virtue of the motion vectors formed by the n characteristic areas and the matched areas, so that the effect of identifying a type of the operation of the user and further generating the corresponding operating instruction by virtue of the fingerprint identification module is achieved.

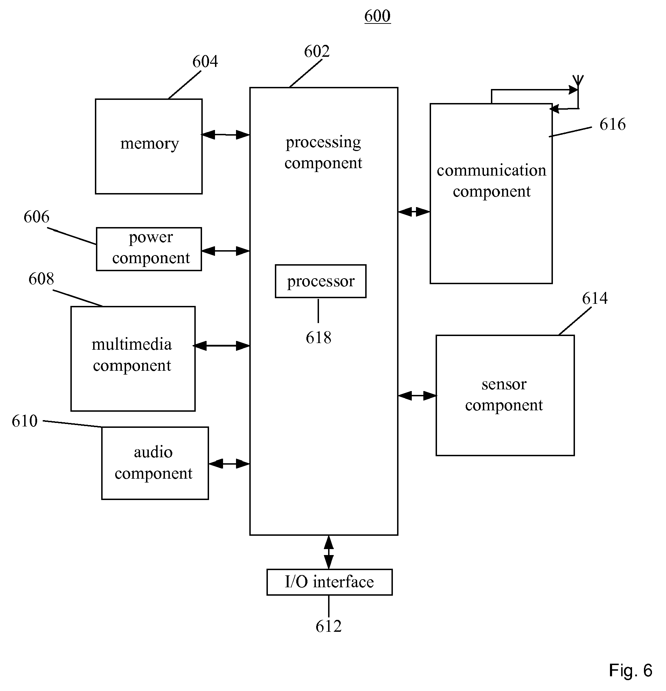

Fig. 6 is a block diagram of a device configurable to implement an instruction generation method, according to an exemplary embodiment. For example, the device 600 may be a mobile phone, a computer, a digital broadcast terminal, a messaging device, a gaming console, a tablet, a medical device, exercise equipment, a personal digital assistant and the like.

Referring to Fig. 6, the device 600 may include one or more of the following components: a processing component 602, a memory 604, a power component 606, a multimedia component 608, an audio component 610, an Input/Output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 618 to execute instructions to perform all or part of the steps in the abovementioned methods. Moreover, the processing component 602 may include one or more modules which facilitate interaction between the processing component 602 and the other components. For instance, the processing component 602 may include a multimedia module to facilitate interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 606 provides power for various components of the device 600. The power component 606 may include a power management system, one or more power supplies, and other components associated with the generation, management and distribution of power for the device 600.

The multimedia component 608 includes a screen providing an output interface between the device 600 and the user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 608 includes a front camera and/or a rear camera. The front camera and/or the rear camera may receive external multimedia data when the device 600 is in an operation mode, such as a photographing mode or a video mode. Each of the front camera and the rear camera may be a fixed optical lens system or have focusing and optical zooming capabilities.

The audio component 610 is configured to output and/or input an audio signal. For example, the audio component 610 includes a microphone (MIC), and the MIC is configured to receive an external audio signal when the device 600 is in the operation mode, such as a call mode, a recording mode and a voice recognition mode. The received audio signal may be further stored in the memory 604 or sent through the communication component 616. In some embodiments, the audio component 610 further includes a speaker configured to output the audio signal.

The I/O interface 612 provides an interface between the processing component 602 and a peripheral interface module, and the peripheral interface module may be a keyboard, a click wheel, a button and the like. The button may include, but not limited to: a home button, a volume button, a starting button and a locking button.

The sensor component 614 includes one or more sensors configured to provide status assessment in various aspects for the device 600. For instance, the sensor component 614 may detect an on/off status of the device 600 and relative positioning of components, such as a display and small keyboard of the device 600, and the sensor component 614 may further detect a change in a position of the device 600 or a component of the device 600, presence or absence of contact between the user and the device 600, orientation or acceleration/deceleration of the device 600 and a change in temperature of the device 600. The sensor component 614 may include a proximity sensor configured to detect presence of an object nearby without any physical contact. The sensor component 614 may also include a light sensor, such as a Complementary Metal Oxide Semiconductor (CMOS) or Charge Coupled Device (CCD) image sensor, configured for use in an imaging application. In some embodiments, the sensor component 614 may also include an acceleration sensor, a gyroscope sensor, a magnetic sensor, a pressure sensor or a temperature sensor.

The communication component 616 is configured to facilitate wired or wireless communication between the device 600 and another device. The device 600 may access a communication-standard-based wireless network, such as a Wireless Fidelity (WiFi) network, a 2nd-Generation (2G) or 3rd-Generation (3G) network or a combination thereof. In an exemplary embodiment, the communication component 616 receives a broadcast signal or broadcast associated information from an external broadcast management system through a broadcast channel. In an exemplary embodiment, the communication component 616 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In the exemplary embodiment, the device 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In the exemplary embodiment, there is also provided a non-transitory computer-readable storage medium including an instruction, such as the memory 604 including an instruction, and the instruction may be executed by the processor 618 of the device 600 to implement the abovementioned methods. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

### INDUSTRIAL APPLICABILITY

According to the instruction generation method provided by the present disclosure, different position information of the same fingerprint in the fingerprint images is analysed to obtain the corresponding position change information to form the corresponding operating instruction, and the operating instruction may be configured to implement a translation control or a rotation control over the operation object, so that the problem that the fingerprint identification module is only applicable to a fingerprint identification scenario is solved, and the effect of identifying a translation operation or a rotation operation of a user to further control the operation object in the electronic equipment by utilizing the fingerprint identification module as a human-computer interaction component is achieved.

## Claims

1. A method for generating an instruction, **characterized in that** the method comprises:
acquiring at least two frames of fingerprint images of the same fingerprint (202);
calculating position change information of the fingerprint according to the at least two frames of fingerprint images (204); and
generating an operating instruction according to the position change information, wherein the operating instruction comprises a translation instruction and/or a rotation instruction (206).

2. The method according to claim 1, wherein the step of calculating position change information of the fingerprint according to the at least two frames of fingerprint images comprises:
acquiring n characteristic areas in the i^{th} frame of fingerprint image, i being an integer and n being a positive integer (302);
searching, in the (i+1)th frame of fingerprint image, for matched areas matched with the n characteristic areas, respectively (303);
for each characteristic area, calculating a motion vector of the characteristic area according to the characteristic area and the corresponding matched area (304); and
determining the motion vectors of the n characteristic areas as the position change information of the fingerprint (305).

3. The method according to claim 2, wherein the step of acquiring n characteristic areas in the i^{th} frame of fingerprint image comprises:
acquiring the n characteristic areas in the i^{th} frame of fingerprint image according to n preset area positions; or
acquiring the n characteristic areas from the i^{th} frame of fingerprint image according to a preset condition, wherein the preset condition comprises at least one of the following: a definition is higher than a first threshold value, a contrast is higher than a second threshold value, a local characteristic is consistent with a preset characteristic and the current area is a matched area relative to a reference area in the previous frame of fingerprint image.

4. The method according to claim 2, wherein the step of generating an operating instruction according to the position change information comprises:
generating the translation instruction according to the n motion vectors when motion directions of the n motion vectors are the same (306).

5. The method according to claim 2, wherein the step of generating an operating instruction according to the position change information comprises:
when n is more than or equal to 2 and the motion directions of the n motion vectors are different, determining a rotation direction and a rotation angle according to the n motion vectors (307); and
generating the rotation instruction according to the rotation direction and the rotation angle (308).

6. The method according to claim 5, wherein the step of determining a rotation direction and a rotation angle according to the n motion vectors comprises:
determining a rotating center point according to a perpendicular bisector corresponding to each of the n motion vectors (307a); and
determining the rotation direction and the rotation angle according to the directions of the n motion vectors and the rotating center point (307b).

7. A device for generating an instruction, **characterized in that** the device comprises:
an acquisition module (410) configured to acquire at least two frames of fingerprint images of the same fingerprint;
a calculation module (420) configured to calculate position change information of the fingerprint according to the at least two frames of fingerprint images; and
an instruction generation module (430) configured to generate an operating instruction according to the position change information, wherein the operating instruction comprises a translation instruction and/or a rotation instruction.

8. The device according to claim 7, wherein the calculation module comprises:
a characteristic acquisition sub-module (521) configured to acquire n characteristic areas in the i^{th} frame of fingerprint image, i being an integer and n being a positive integer;
a searching sub-module (522) configured to search, in the (i+1)th frame of fingerprint image, for matched areas matched with the n characteristic areas, respectively;
a vector calculation sub-module (523) configured to, for each characteristic area, calculate a motion vector of the characteristic area according to the characteristic area and the corresponding matched area; and
a position change sub-module (524) configured to determine the motion vectors of the n characteristic areas as the position change information of the fingerprint.

9. The device according to claim 8, wherein
the characteristic acquisition sub-module (521) is configured to acquire the n characteristic areas in the i^{th} frame of fingerprint image according to n preset area positions; or
the characteristic acquisition sub-module (521) is configured to acquire the n characteristic areas from the i^{th} frame of fingerprint image according to a preset condition, wherein the preset condition comprises at least one of the following: a definition is higher than a first threshold value, a contrast is higher than a second threshold value, a local characteristic is consistent with a preset characteristic and the current area is a matched area relative to a reference area in the previous frame of fingerprint image.

10. The device according to claim 7, wherein the instruction generation module comprises:
a first instruction sub-module (531) configured to generate the translation instruction according to the n motion vectors when motion directions of the n motion vectors are the same.

11. The device according to claim 7, wherein the instruction generation module comprises:
a second instruction sub-module (532) configured to, when n is more than or equal to 2 and the motion directions of the n motion vectors are different, determine a rotation direction and a rotation angle according to the n motion vectors; and
a third instruction sub-module (533) configured to generate the rotation instruction according to the rotation direction and the rotation angle.

12. The device according to claim 11, wherein the second instruction sub-module further comprises:
a center determination sub-module (5321) configured to determine a rotating center point according to a perpendicular bisector corresponding to each of the n motion vectors; and
a rotation determination sub-module (5322) configured to determine the rotation direction and the rotation angle according to the directions of the n motion vectors and the rotating center point.

13. An instruction generation device, comprising:
a processor (618); and
a memory (604) configured to store executable instructions of the processor,
**characterized in that** the processor is configured to:
acquire at least two frames of fingerprint images of the same fingerprint;
calculate position change information of the fingerprint according to the at least two frames of fingerprint images; and
generate an operating instruction according to the position change information, wherein the operating instruction comprises a translation instruction and/or a rotation instruction.

14. A computer program including instructions for executing the steps of a method for generating an instruction according to any of claims 1 to 6 when said program is executed by a computer.

15. A recording medium readable by a computer and having recorded thereon a computer program including instructions for executing the steps of a method for generating an instruction according to any of claims 1 to 6.
